# EUROPÄISCHE PATENTSCHRIFT

(11) **EP 0 519 551 B1**
(45) Veröffentlichungstag und Bekanntmachung des Hinweises auf die Patenterteilung: **11.09.1996**
(21) Anmeldenummer: 92201683.7
(22) Anmeldetag: 10.06.1992
(51) Int. Cl.: H04B 3/23

(54) **Echokompensator mit einer Steuereinrichtung für einen Mittelpunktbegrenzer**
Echo canceller with control device for centre clipper
Annuleur d'écho avec dispositif de commande pour un écrêteur de centre

(30) Priorität: 18.06.1991 DE 4119963
(43) Veröffentlichungstag der Anmeldung: 23.12.1992
(73) Patentinhaber: Philips Patentverwaltung GmbH, 22335 Hamburg (DE); Philips Electronics N.V., 5621 BA Eindhoven (NL)
(72) Erfinder: Armbrüster, Werner, W-2000 Hamburg 1 (DE)
(74) Vertreter: Volmer, Georg, Dipl.-Ing.

(56) Entgegenhaltungen:
- EP-A- 0 053 202

## Beschreibung

Die Erfindung betrifft einen Echokompensator mit einem zwischen eine Empfangs- und eine Sendestrecke einschaltbaren adaptiven Filter und mit einem in die Sendestrecke einschaltbaren nichtlinearen Filter.

Derartige Echokompensatoren werden insbesondere zur elektrischen Echokompensation von Sprachsignalen für Telefonverbindungen über Satellitenstrecken sowie zur akustischen Echokompensation bei Videokonferenzverbindungen benötigt. Hier kommt es aufgrund einer aufwendigen Bildkodierung zu einer zusätzlichen Verzögerung des Sprachsignals. Derartige Laufzeitverzögerungen des Sprachsignals führen bei Telefonverbindungen über Satellitenstrecken zu einem Leitungsecho und bei Videokonferenzverbindungen zu einem akustischen Echo. Dies ist jedoch nur der Fall, wenn der ferne Sprecher aktiv ist oder wenn Doppelsprechen vorliegt, d.h. wenn der ferne und der nahe Sprecher aktiv sind. Im Ruhezustand sowie im Zustand "naher Sprecher aktiv" tritt kein Echo auf.

Ein Echokompensator der eingangs genannten Art ist aus EP 0 106 640 B1 bekannt. Dabei ist in Fig. 2 der EP 0 106 640 B1 ein Echokompensator dargestellt, der zwischen einer Sende- und einer Empfangsstrecke eingeschaltet ist. Der Echokompensator besteht aus einem Filter 100, welches aus dem Empfangssignal einen Echoschätzwert bildet, und einem Subtrahierer 45, der den Echoschätzwert vom Sendesignal subtrahiert. Außerdem ist in die Sendestrecke nach dem Subtrahierer ein als Centerclipper bezeichnetes nichtlineares Filter eingeschaltet, wobei dessen Filterschwellwert vom Echoschätzwert steuerbar ist.

Aus EP-A-0 053 202 ist ein Echokompensator der eingangs genannten Art bekannt, bei dem ein adaptives Filter zwischen Sende- und Empfangsstrecke und ein nichtlineares Filter in die Sendestrecke eingeschaltet werden kann. Der Echokompensator nach EP-A-0 053 202 enthält weiterhin drei Detektoren zur Ermittlung des Zustandes Doppelsprechen und eine Steuerlogik, die aktiviert durch die logischen Ausgangssignale der Detektoren bei Ermittlung des Zustandes Doppelsprechen das nichtlineare Filter in die Sendestrecke einschaltet.

Der Erfindung liegt die Aufgabe zugrunde, einen Echokompensator der eingangs genannten Art anzugeben, der eine Verbesserung der Echokompensation insbesondere beim Zustand Doppelsprechen aufweist und bei dem eine irrtümliche Aktivierung des nichtlinearen Filters beim ermittelten Zustand Doppelsprechen nahezu vermieden wird.

Diese Aufgabe wird bei einem Echokompensator der eingangs genannten Art erfindungsgemäß dadurch gelöst, daß der Echokompensator die in den Patentansprüchen 1, 9 und 11 angegebenen Merkmale aufweist.

Die Erfindung geht dabei von der Erkenntnis aus, daß das größte Problem der Steuerung des nichtlinearen Filters, d.h. der Aktivierung des nichtlinearen Filters bzw. der Vorgabe der Schwelle, in der Erkennung von Doppelsprechen liegt. Werden lediglich das Empfangssignal und das Sendesignal vor und ggf. auch nach einem in der Sendestrecke eingeschalteten Subtrahierer ausgewertet und hieraus der Zustand Doppelsprechen ermittelt, so wird in bestimmten Fällen, beispielsweise dann, wenn der nahe Sprecher leise spricht, irrtümlicherweise anstelle des Zustands Doppelsprechen der Zustand fernes Sprechen ermittelt. Der dann fälschlich ermittelte Zustand fernes Sprechen hat zur Folge, daß das nichtlineare Filter aktiviert wird und damit Silben oder ganze Wortteile des nahen Sprechenden abgeschnitten werden. Hierdurch wird die Verständigung erheblich beeinträchtigt. Zur Vermeidung einer derartigen irrtümlichen Aktivierung des nichtlinearen Filters werden von einer Auswerteeinheit zunächst das Empfangssignal sowie das Sendesignal vor und nach dem Subtrahierer ausgewertet und hieraus die vier möglichen Zustände: Ruhezustand, fernes Sprechen, nahes Sprechen und Doppelsprechen ermittelt. Zur Aktivierung des nichtlinearen Filters müssen zwei Bedingungen erfüllt sein. Eine Bedingung ist, daß als Zustand fernes Sprechen ermittelt worden ist und als zweite Bedingung muß darüber hinaus der Vorwärts-Rückwärtszähler den vorgebbaren Wert, insbesondere den Wert Null erreicht haben. Der Vorwärts-Rückwärtszähler zählt dabei mit verschieden großen Werten vor und zurück. Der erste Wert zum Vorwärtszählen ist dabei wesentlich größer als der zweite Wert zum Rückwärtszählen. Ein Vorwärtszählen mit dem größeren ersten Wert des Vorwärts-Rückwärtszählers erfolgt lediglich dann, wenn von der Auswerteeinrichtung der Zustand Doppelsprechen ermittelt wird. Bei allen anderen ermittelten Zuständen Nicht-Doppelsprechen, d.h. beim Ruhezustand, bei den Zuständen fernes Sprechen und nahes Sprechen, zählt der Vorwärts-Rückwärtszähler mit dem kleineren zweiten Wert zurück. Erst wenn beide Bedingungen - ermittelter Zustand fernes Sprechen und der Zähler nimmt den Wert Null an - erfüllt sind, erfolgt eine Aktivierung des nichtlinearen Filters. Hierdurch wird beim irrtümlich ermittelten Zustand fernes Sprechen statt des Zustands Doppelsprechen eine irrtümliche Aktivierung des nichtlinearen Filters vermieden. Insbesondere in den Fällen, in denen der nahe Sprecher leise spricht, wird damit eine erhebliche Verbesserung der Verständigung ermöglicht.

Eine einfache Erfüllung der zwei Bedingungen für die Aktivierung des Vorwärts-Rückwärtszählers wird dadurch erreicht, daß der Vorwärtszähleingang des Vorwärts-Rückwärtszählers mit dem den Zustand Doppelsprechen kennzeichnenden Ausgang und der Rückwärtszähleingang mit den die Zustände Nicht-Doppelsprechen kennzeichnenden Ausgängen der Auswerteeinheit gekoppelt ist, wobei der den Zustand fernes Sprechen kennzeichnende Ausgang der Auswerteeinheit mit dem Ausgang des Vorwärts-Rückwärtszählers mittels eines Und-Gliedes verknüpft ist.

Eine einfache Ansteuerung des Rückwärtszähleingangs des Vorwärts-Rückwärtszählers wird dadurch ermöglicht, daß die Ausgänge der Auswerteeinheit für die Zustände Nicht-Doppelsprechen mittels eines Oder-Gliedes verknüpft sind, wobei der Ausgang des Oder-Gliedes an den Rückwärtszähleingang des Vorwärts-Rückwärtszählers angeschlossen ist.

Bei einer Ausgestaltungsform ist das Maximum des Vorwärts-Rückwärtszählers in Abhängigkeit der Dämpfung des adaptiven Filters insbesondere adaptiv vorgebbar. Ist die Dämpfung des adaptiven Filters beispielsweise gering, so wird für das Maximum des Vorwärts-Rückwärtszählers ein großer Wert gewählt. Mit steigender Dämpfung des Echofilters wird das Maximum verringert. Dieser Ausgestaltungsform liegt die Überlegung zugrunde, daß der Zustand Doppelsprechen um so besser erkannt wird und damit Fehlentscheidungen um so seltener sind, je größer die Dämpfung des adaptiven Filters ist.

Mögliche Realisierungsformen für das nichtlineare Filter ergeben sich dadurch, daß das nichtlineare Filter zur Unterdrückung seines Eingangssignals beim Unterschreiten des Betrags einer vorgebbaren Schwelle und zur Verringerung des Eingangssignals bei Überschreiten des Betrags der Schwelle um den Betrag der Schwelle oder zum Durchschalten des Eingangssignals beim Überschreiten des Betrags der Schwelle vorgesehen ist.

Im folgenden wird die Erfindung anhand der in den Figuren dargestellten Ausführungsbeispiele näher erläutert. Es zeigen
Fig. 1 ein Ausführungsbeispiel eines Echokompensators,
Fig. 2 ein Ausführungsbeispiel einer Auswerteeinrichtung für einen Echokompensator.

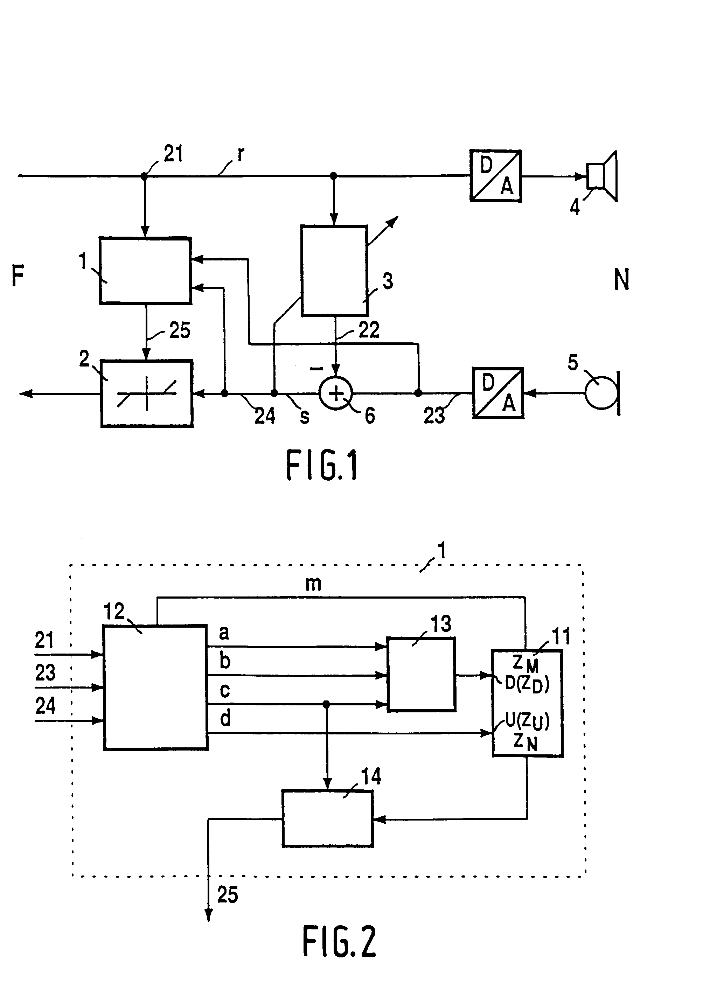

Fig. 1 zeigt einen Echokompensator, wie er beispielsweise bei einer Videokonferenzverbindung einsetzbar ist. Der Echokompensator 1, 2, 3, 6 ist zwischen eine Sendestrecke s und eine Empfangsstrecke r sowie um die Sendestrecke S eingeschaltet. Auf der Empfangsstrecke r werden von einem fernen Ende F übermittelte Sprachsignale digital übertragen. Diese werden einem Digital-Analog-Wandler D/A zugeführt, dessen analoger Ausgang an einen Lautsprecher 4 eines nahen Endes N angeschlossen ist. Am nahen Ende N ist darüber hinaus ein Mikrofon 5 angeordnet. Die Eingangssignale des Mikrofons 5 werden einem Analog-Digital-Wandler A/D zugeführt, dessen digitaler Ausgang an die Sendestrecke s angeschlossen ist. Der Echokompensator 1, 2, 3 besteht aus einem adaptiven Filter 3, aus einem Subtrahierer 6, einer Auswerteeinrichtung 1 sowie einem nichtlinearen Filter 2. Dem adaptiven Filter 3 wird das auf der Empfangsstrecke r übertragene digitale Signal zugeführt, wobei das adaptive Filter 3 aus dem Empfangssignal einen Echoschätzwert 22 bildet. Der vom adaptiven Filter erzeugte Echoschätzwert 22 wird vom Sendesignal mittels des Subtrahierers 6 subtrahiert. Außerdem ist in die Sendestrecke s nach dem Subtrahierer 6 das als "Centerclipper" bezeichnete nichtlineare Filter 2 eingeschaltet, dessen Ausgangssignal an das ferne Ende F der Videokonferenzverbindung übertragen wird. Die Auswerteeinrichtung 1 wertet das auf der Empfangsstrecke r übertragene Empfangssignal 21 sowie das Sendesignal 23 vor und 24 nach dem Subtrahierer aus und steuert das nichtlineare Filter 2. Am fernen Ende F ist vorteilhafter Weise ein gleichartiger Echokompensator entsprechend dem in Fig. 1 dargestellten Ausführungsbeispiel vorgesehen.

Im folgenden soll die prinzipielle Arbeitsweise des in Fig. 1 dargestellten Echokompensators 1, 2, 3, 6 näher beschrieben werden. Als bereits bekannte Komponente enthält der Echokompensator das adaptive Filter 3, dem das Empfangssignal 21 zugeführt wird. Das adaptive Filter 3 bildet einen Echoschätzwert 22. Das adaptive Filter 3 bildet die Übertragungseigenschaften zwischen Lautsprecher 4 und Mikrofon 5, d.h. die akustische Raumimpulsantwort, elektrisch nach und erzeugt das synthetische Echosignal 22, d.h. den Echoschätzwert 22. Dieses Echosignal 22 wird vom digitalisierten Sendesignal des Mikrofons 5 subtrahiert und löscht somit durch gegenphasige Addition das Raumecho annähernd aus. Die Koeffizienten des adaptiven Filters 3 müssen veränderbar sein, d.h. das Filter 3 muß adaptiv sein, da die Raumimpulsantwort stark von den Eigenschaften des Raumes sowie der Plazierung von Lautsprecher 4 und Mikrofon 5 abhängt. Zum Einstellen der Koeffizienten wird beispielsweise der sogenannte NLMS-Algorithmus (Normalised Least Mean Square) verwendet. Die Leistungsfähigkeit des adaptiven Filters 3 ist jedoch begrenzt. Das verbleibende Restecho des Signals 24 wird mittels des nichtlinearen Filters 2 (Centerclipper) unterdrückt. Eine mögliche Kennlinie des nichtlinearen Filters 2 ist innerhalb des Blocks 2 dargestellt. Hieraus ergibt sich, daß das Eingangssignal 24 des nichtlinearen Filters 2 beim Unterschreiten des Betrags einer vorgebbaren Schwelle unterdrückt wird und beim Überschreiten dieser Schwelle um den Betrag der Schwelle verringert wird. Mit anderen Worten: ist das Eingangssignal 24 des nichtlinearen Filters 2 kleiner als dessen Schwelle, so ist das Ausgangssignal identisch Null. Überschreitet das Eingangssignal die Schwelle, so erscheint am Ausgang des nichtlinearen Filters 2 ein verzerrtes Signal, das man sich als lineare Überlagerung des Eingangssignals 24 mit einem Störsignal vorstellen kann. Die Schwelle des nichtlinearen Filters 2 kann adaptiv gewählt werden. Nimmt die Schwelle den Wert Null an, so wird das nichtlineare Filter 2 zu einem Kurzschluß, wählt man die Schwelle sehr groß, so entspricht das nichtlineare Filter 2 einem offenen Schalter. Die Steuerung des nichtlinearen Filters 2 erfolgt mit Hilfe der Auswerteeinrichtung 1. Diese ermittelt, wie im Zusammenhang mit Fig. 2 noch ausführlicher beschrieben wird, aus dem Empfangssignal 21 sowie dem Sendesignal 23 vor bzw. 24 nach dem Subtrahier 6 vier Zustände. Im Ruhezustand liegt weder fernes noch nahes Sprechen vor. Dabei bleibt das nichtlineare Filter 2 inaktiv. Im Zustand fernes Sprechen soll das nichtlineare Filter 2 aktiv sein und so das verbleibende Restecho des Signals 24 unterdrücken. Im Zustand nahes Sprechen sowie im Zustand Doppelsprechen soll das nichtlineare Filter inaktiv sein, d.h. die Schwelle des nichtlinearen Filters 2 soll den Wert Null annehmen. Das größte Problem bei der Ansteuerung des nichtlinearen Filters 2 besteht in der Erkennung von Doppelsprechen. Die Entscheidung, ob fernes Sprechen oder ob Doppelsprechen vorliegt, erfolgt im allgemeinen durch einen Pegelvergleich der Signale 21 und 23, wobei ggf. auch das Signal 24 mit herangezogen wird. Insbesondere dann, wenn der nahe Sprecher leise spricht, kann jedoch irrtümlicherweise auf den Zustand fernes Sprechen statt des Zustands Doppelsprechen entschieden werden. Hierdurch wird bei bekannten Systemen dann irrtümlicherweise das nichtlineare Filter 2 aktiviert und hierdurch Silben bzw. ganze Wortteile des nahen Sprechers abgeschnitten. Hierdurch wird die Verständigung erheblich beeinträchtigt.

Zur Vermeidung derartiger Beeinträchtigungen ist in der Auswerteeinrichtung 1 neben einer Auswerteeinheit zur Ermittlung der Zustände ein Zähler vorgesehen, dessen Minimum Null und dessen Maximum eine obere Grenze ist. Der Zähler wird bei Erkennen von Doppelsprechen mit einem ersten Wert inkrementiert und beim Nichterkennen von Doppelsprechen mit einem zweiten Wert dekrementiert. Dabei ist der erste Wert, mit dem der Zähler inkrementiert, deutlich größer als der zweite Wert, mit dem der Zähler dekrementiert wird. Das nichtlineare Filter 2 wird von dem in der Logikschaltung 1 vorgesehenen Zähler so angesteuert, daß das nichtlineare Filter erst aktiviert wird, wenn der Zähler den Wert Null erreicht. Hierdurch werden Fehlentscheidungen insbesondere während des Doppelsprechens überbrückt und das nichtlineare Filter 2 kann nicht irrtümlicherweise aktiviert werden. Das Maximum des Zählers ist ebenfalls adaptiv und hängt von der Dämpfung des adaptiven Filters 3 ab. Je größer die Dämpfung des adaptiven Filters 3 ist, um so besser wird Doppelsprechen erkannt und um so seltener werden Fehlentscheidungen. Ist die Dämpfung des adaptiven Filters gering, so wird für das Maximum des Zählers ein großer Wert gewählt. Mit steigender Dämpfung des adaptiven Filters 3 wird das Maximum des Zählers verringert.

Fig. 2 zeigt ein Ausführungsbeispiel für eine in Fig. 1 im Echokompensator enthaltene Auswerteeinrichtung 1. Die Auswerteeinrichtung 1, die im folgenden auch als Logikschaltung bezeichnet wird, wird aus einer Auswerteeinheit 12, einem Oder-Glied 13, einem Vorwärts-Rückwärtszähler 11 sowie einem Und-Glied 14 gebildet. Der Auswerteeinheit 12 werden die Signale 21, 23, 24 zugeführt, die im Zusammenhang mit Fig. 1 bereits eingeführt wurden. Die Auswerteeinheit 12 führt eine Zustandsentscheidung durch und ermittelt aus den Signalen 21, 23, 24 die Zustände Ruhezustand a, nahes Sprechen b, fernes Sprechen c sowie Doppelsprechen d. Die Auswerteeinheit 12 weist darüber hinaus einen Ausgang m zur Vorgabe des Maximums des Vorwärts-Rückwärtszählers 11 auf. Die Ausgänge für die Zustände Ruhezustand a, nahes Sprechen b sowie fernes Sprechen c bilden die Eingangssignale des Oder-Gliedes 13. Der Ausgang des Oder-Gliedes 13 ist an den Rückwärtszähleingang D des Vorwärts-Rückwärtszählers 11 angeschlossen. Der Vorwärtszähleingang U des Zählers 11 wird vom erkannten Zustand Doppelsprechen d angesteuert. Der Ausgang des Vorwärts-Rückwärtszählers 11 ist an einen ersten Eingang des Und-Gliedes 14 angeschlossen, wobei ein *zweiter Eingang des Und-Gliedes 14 von dem erkannten* Zustand fernes Sprechen c angesteuert wird. Der Ausgang des Und-Gliedes 14 liefert das Steuersignal 25 (Fig. 1) zur Ansteuerung des nichtlinearen Filters (Centerclipper) 2.

Die prinzipielle Funktionsweise der Logikschaltung 1 erfolgt folgendermaßen: Der Zähler 11 wird beim Erkennen von Doppelsprechen d mit einem ersten Wert Z_{U} inkrementiert und bei Nichterkennen von Doppelsprechen, d.h. bei Erkennen der Zustände Ruhezustand a, nahes Sprechen b und fernes Sprechen c, mit einem zweiten Wert Z_{D} dekrementiert. Dabei ist der erste Wert Z_{U} deutlich größer als der zweite Wert Z_{D}. Die in Fig. 2 dargestellte Logikschaltung 1 bewirkt somit, daß das in Fig. 1 dargestellte nichtlineare Filter 2 erst dann aktiv wird, d.h. ein Signal 25 anliegt, wenn die Auswerteeinrichtung den Zustand fernes Sprechen c und wenn der Vorwärts-Rückwärtszähler 11 den Wert Null angenommen hat. Auf diese Art und Weise werden Fehlentscheidungen des nichtlinearen Filters insbesondere während des Doppelsprechens d überbrückt und es wird eine irrtümliche Aktivierung des nichtlinearen Filters 2 (Fig. 1) vermieden. Hierdurch ergibt sich eine wesentliche Verbesserung der Verständigung.

Die Auswerteeinheit 12 legt auch das Maximum Z_{M} des Zählers 11 fest. Dieses Maximum Z_{M} hängt von der Dämpfung des adaptiven Filters 3 (Fig. 1) ab. Je größer die Dämpfung des adaptiven Filters ist, um so besser wird der Zustand Doppelsprechen d erkannt und um so seltener werden Fehlentscheidungen. Ist die Dämpfung des adaptiven Filters gering, wird für das Maximum Z_{M} des Zählers 11 ein großer Wert gewählt. Mit steigender Dämpfung des adaptiven Filters wird das Maximum Z_{M} verringert.

Der im Ausführungsbeispiel beschriebene Echokompensator ist neben einer Anwendung für eine Videokonferenz-verbindung auch für weitere Anwendungsfälle, bei denen eine Echokompensation benötigt wird, einsetzbar. So ist ein derartiger Echokompensator beispielsweise auch für die Echokompensation von Sprachsignalen bei der Übertragung von Telefongesprächen über Satellitenstrecken geeignet. In diesem Fall sind das in Fig. 1 dargestellte Mikrofon 5 sowie der Lautsprecher 4 durch eine Gabelschaltung eines Telefonhörers mit einer Sprech- sowie einer Hörmuschel zu ersetzen.

Anstelle eines Vorwärts-Rückwärtszählers kann der Echokompensator auch eine Steuereinheit aufweisen, die die Einschaltung des nichtlinearen Filters steuert. Die Ansteuerung erfolgt dabei so, daß das nichtlineare Filter nur bei Erfüllung der folgenden zwei Bedingungen aktiviert wird, nämlich als erste Bedingung, wenn der Zustand fernes Sprechen ermittelt wird und als zweite Bedingung, wenn die Steuereinheit einen Steuerwert ermittelt, der einem vorgebbaren Wert bzw. Wertebereich entspricht. Der Steuerwert ergibt sich dabei beispielsweise aus der Differenz der mit einem ersten Gewichtungsfaktor gewichteten Anzahl des Zustands Doppelsprechen und der mit einem gegenüber dem ersten Gewichtungsfaktor kleineren zweiten Gewichtungfaktor gewichteten Anzahl der ermittelten Zustände Nicht-Doppelsprechen. Die Steuereinheit kann dabei einen Zähler aufweisen, der die Anzahl der ermittelten Zustände Doppelsprechen und Nicht-Doppelsprechen in einem vorgebbaren Takt ermittelt. Die Grundstruktur des in Fig. 2 dargestellten Blockschaltbildes bleibt dabei erhalten. Lediglich anstelle des Vorwärts-Rückwärtszählers wird die Steuereinheit 11 eingesetzt.

Die Steuereinheit 11 kann auch als Filter mit einer schnell ansteigenden und einer langsam abklingenden Impulsantwort ausgebildet sein. Ein derartiges Filter 11 wird ebenfalls in Abhängigkeit des ermittelten Zustandes Doppelsprechen sowie der Zustände Nicht-Doppelsprechen angesteuert. Dabei steuert der ermittelte Zustand Doppelsprechens die anwachsende Kennlinie der Impulsantwort des Filters 11 an, während die Zustände Nicht-Doppelsprechen die langsam abklingende Kennlinie des Filters 11 ansteuern. Eine Aktivierung des nichtlinearen Filters 14 erfolgt dabei entsprechend dem Fig. 2 dargestellten Ausführungsbeispiel erst dann, wenn sowohl die erste Bedingung, d.h. ermittelter Zustand fernes Sprechen, als auch die zweite Bedingung, daß der Ausgangswert des Filters 11 einen vorgebbaren Z_{N} Wert erreicht, erfüllt sind.

## Patentansprüche

1. Echokompensator (1, 2, 3, 6) mit einem zwischen eine Empfangs- (r) und eine Sendestrecke (s) einschaltbaren adaptiven Filter (3) und mit einem in die Sendestrecke (s) einschaltbaren nichtlinearen Filter (2),
dadurch gekennzeichnet,
daß der Echokompensator (1, 2, 3, 6) einen Vorwärts-Rückwärtszähler (11) aufweist, der zum Zählen in eine erste Richtung mit einem ersten Wert (Z_{U}) beim Zustand Doppelsprechen (d) und zum Zählen in eine gegenüber der ersten Richtung entgegengesetzte Richtung mit einem gegenüber dem ersten Wert (Z_{U}) kleineren zweiten Wert (Z_{D}) bei Zuständen Nicht-Doppelsprechen (a, b, c) vorgesehen ist, wobei das nichtlineare Filter (2) nur beim Zustand fernes Sprechen (c) und beim Erreichen eines vorgebbaren kleinen Wertes (Z_{N}), insbesondere des Wertes Null, durch den Vorwärts-Rückwärtszähler (11) zur Einschaltung in die Sendestrecke (s) vorgesehen ist.

2. Echokompensator nach Anspruch 1,
dadurch gekennzeichnet,
daß der Echokompensator (1, 2, 3, 6) eine Auswerteeinheit (12) zur Ermittlung der Zustände Doppelsprechen (d), fernes Sprechen (c), Ruhezustand (a) und nahes Sprechen (b) aufweist, wobei das nichtlineare Filter (2) bei ermitteltem Zustand fernes Sprechen (c) aktiv und bei ermittelten Zuständen nahes Sprechen (b), Doppelsprechen (d) und Ruhezustand (a) inaktiv ist.

3. Echokompensator nach einem der Ansprüche 1 oder 2,
dadurch gekennzeichnet,
daß der Vorwärtszähleingang (U) des Vorwärts-Rückwärtszählers (11) mit dem den Zustand Doppelsprechen (d) kennzeichnenden Ausgang und der Rückwärtszähleingang (D) mit den die Zustände Nicht-Doppelsprechen (a, b, c) kennzeichnenden Ausgängen der Auswerteeinheit (12) gekoppelt ist, wobei der den Zustand fernes Sprechen (c) kennzeichnende Ausgang der Auswerteeinheit (12) mit dem Ausgang (Z_{N}) des Vorwärts-Rückwärtszählers (11) mittels eines Und-Gliedes (14) verknüpft ist.

4. Echokompensator nach einem der Ansprüche 1 bis 3,
dadurch gekennzeichnet,
daß die Ausgänge der Auswerteeinheit (12) für die Zustände Nicht-Doppelsprechen (a, b, c) mittels eines Oder-Gliedes (13) verknüpft sind, wobei der Ausgang des Oder-Gliedes (13) an den Rückwärtszähleingang (D) des Vorwärts-Rückwärtszählers (11) angeschlossen ist.

5. Echokompensator nach einem der Ansprüche 1 bis 4,
dadurch gekennzeichnet,
daß das Maximum (Z_{M}) des Vorwärts-Rückwärtszählers (11) in Abhängigkeit der Dämpfung des adaptiven Filters (3) insbesondere adaptiv vorgebbar ist.

6. Echokompensator nach Anspruch 5,
dadurch gekennzeichnet,
daß bei geringer Dämpfung des adaptiven Filters (3) das Maximum (Z_{M}) des Zählers (11) einen großen Wert beträgt und daß mit steigender Dämpfung des adaptiven Filters (3) das Maximum (Z_{M}) kleiner ist.

7. Echokompensator nach einem der Ansprüche 1 bis 6,
dadurch gekennzeichnet,
daß das nichtlineare Filter (2) zur Unterdrückung seines Eingangssignals (24) beim Unterschreiten des Betrags einer vorgebbaren Schwelle und zur Verringerung des Eingangssignals (24) beim überschreiten des Betrags der Schwelle um den Betrag der Schwelle oder zum Durchschalten des Eingangssignals (24) beim Überschreiten der Schwelle vorgesehen ist.

8. Videokonferenzeinrichtung oder Satellitenübertragungseinrichtung mit einem Echokompensator (1, 2, 3, 6) nach einem der Ansprüche 1 bis 7.

9. Echokompensator (1, 2, 3, 6) mit einem zwischen eine Empfangs- (r) und eine Sendestrecke (s) einschaltbaren adaptiven Filter (3) und mit einem in die Sendestrecke (s) einschaltbaren nichtlinearen Filter (2),
dadurch gekennzeichnet**,**
daß der Echokompensator (1, 2, 3, 6) zur Ermittlung der Zustände Doppelsprechen (d) und Nicht-Doppelsprechen (a, b, c) eine Auswerteeinheit (12) und zur Auswertung der Zustände Doppelsprechen (d) und Nicht-Doppelsprechen (a, b, c) und zur Ermittlung eines Steuerwertes aus den Zuständen Doppelsprechen (d) und Nicht-Doppelsprechen (a, b, c) zur Steuerung der Einschaltung des nichtlinearen Filters (2) in die Sendestrecke (s) eine Steuereinheit (11) aufweist, die als Filter mit einer schnell ansteigenden und einer langsam abklingenden Impulsantwort ausgebildet ist, wobei das nichtlineare Filter (2) nur beim Zustand fernes Sprechen (c) und bei Erreichen des Steuerwertes eines vorgebbaren Wertebereichs (Z_{N}) zur Einschaltung in die Sendestrecke (s) vorgesehen ist.

10. Echokompensator nach Anspruch 9,
dadurch gekennzeichnet,
daß der ermittelte Zustand Doppelsprechen (d) zur Ansteuerung der anwachsenden Kennlinie der Impulsantwort des Filters (11) vorgesehen ist, während die Zustände Nicht-Doppelsprechen (a, b, c) zur Ansteuerung der langsam abklingenden Kennlinie des Filters (11) vorgesehen sind.

11. Echokompensator (1, 2, 3, 6) mit einem zwischen eine Empfangs- (r) und eine Sendestrecke (s) einschaltbaren adaptiven Filter (3) und mit einem in die Sendestrecke (s) einschaltbaren nichtlinearen Filter (2),
dadurch gekennzeichnet,
daß der Echokompensator (1, 2, 3, 6) zur Ermittlung der Zustände Doppelsprechen (d) und Nicht-Doppelsprechen (a, b, c) eine Auswerteeinheit (12) und zur Auswertung der Zustände Doppelsprechen (d) und Nicht-Doppelsprechen (a, b, c) und zur Ermittlung eines Steuerwertes aus den Zuständen Doppelsprechen (d) und Nicht-Doppelsprechen (a, b, c) zur Steuerung der Einschaltung des nichtlinearen Filters (2) in die Sendestrecke (s) eine Steuereinheit (11) aufweist, die zur Vorgabe eines Steuersignals (25) vorgesehen ist, das sich aus der Differenz der mit einem ersten Gewichtungsfaktor gewichteten Anzahl des Zustands Doppelsprechen und der mit einem gegenüber dem ersten Gewichtungsfaktor kleineren zweiten Gewichtungfaktor gewichteten Anzahl der ermittelten Zustände Nicht-Doppelsprechen ergibt, wobei das nichtlineare Filter (2) nur beim Zustand fernes Sprechen (c) und bei Erreichen des Steuerwertes eines vorgebbaren Wertebereichs (Z_{N}) zur Einschaltung in die Sendestrecke (s) vorgesehen ist.

12. Echokompensator nach Anspruch 11,
dadurch gekennzeichnet,
daß die Steuereinheit (11) einen Zähler aufweist, der zur Ermittlung der Anzahl der ermittelten Zustände Doppelsprechen und Nicht-Doppelsprechen in einem vorgebbaren Takt vorgesehen ist.

## Claims

1. Echo canceller (1, 2, 3, 6) comprising an adaptive filter (3) which can be inserted between a receive path (r) and a send path (s), and including a non-linear filter (2) which can be inserted into the send path (s), characterized in that the echo canceller (1, 2, 3, 6) comprises an up/down counter (11) provided for counting in a first direction with a first value (Z_{U}) when the state of doubletalk (d) occurs and for counting in a reverse direction to the first direction with a smaller second value (Z_{D}) relative to the first value (Z_{U}) when states of non-doubletalk (a, b, c) occur, the non-linear filter (2) being included for insertion into the send path (s) only when the state of far-end speech (c) occurs and when the up/down counter (11) reaches a predeterminable small value (Z_{N}).

2. Echo canceller as claimed in Claim 1, characterized in that the echo canceller (1, 2, 3, 6) comprises an evaluation circuit (12) for detecting the states of doubletalk (d), far-end speech (c), rest (a) and near-end speech (b), the non-linear filter (2) being active when the state of far-end speech (c) is detected and being inactive when the states of near-end speech (b), doubletalk (d) and rest (a) are detected.

3. Echo canceller as claimed in one of the Claims 1 or 2, characterized in that the countup input (U) of the up/down counter (11) is coupled to the output featuring the state of doubletalk (d) and the countdown input (D) is coupled to the outputs of the evaluation circuit (12) featuring the states of non-doubletalk (a, b, c), the output of the evaluation circuit (12) featuring the state of far-end speech (c) being combined with the output (Z_{N}) of the up/down counter (11) by means of an AND gate (14).

4. Echo canceller as claimed in one of the Claims 1 to 3, characterized in that the outputs of the evaluation circuit (12) are combined by means of an OR gate (13) for the states of non-doubletalk (a, b, c), the output of the OR gate (13) being connected to the countdown input (D) of the up/down counter (11).

5. Echo canceller as claimed in one of the Claims 1 to 4, characterized in that the maximum value (Z_{M}) of the up/down counter (11) can specifically be predetermined adaptively in response to the attenuation of the adaptive filter (3).

6. Echo canceller as claimed in Claim 5, characterized in that when the attenuation of the adaptive filter (3) is small, the maximum value (Z_{M}) of the counter (11) is a large value and when there is an increasing attenuation of the adaptive filter (3) the maximum value (X_{M}) is smaller.

7. Echo canceller as claimed in one of the Claims 1 to 6, characterized in that the non-linear filter (2) is provided for suppressing its input signal (24) when the value of a predeterminable threshold is fallen short of and for reducing the input signal (24) when the value of the threshold is exceeded by the threshold value, or for switching the input signal (24) through when the threshold is exceeded.

8. Video conference system or satellite transmission system comprising an echo canceller (1, 2, 3, 6) as claimed in one of the Claims 1 to 7.

9. Echo canceller (1, 2, 3, 6) comprising an adaptive filter (3) which can be inserted between a receive path (r) and a send path (s), and including a non-linear filter (2) which can be inserted into the send path (s), characterized in that the echo canceller (1, 2, 3, 6) comprises an evaluation circuit (12) for detecting the states of doubletalk (d) and non-doubletalk (a, b, c) to evaluate the states of doubletalk (d) and non-doubletalk (a, b, c), and comprises a control unit (11) for determining a control value on the basis of the states of doubletalk (d) and non-doubletalk (a, b, c) to control the insertion of the non-linear filter (2) into the send path (s), the control unit (11) being arranged as a filter with a fast rising and a slowly falling impulse response, the non-linear filter (2) being provided for insertion into the send path (s) only when the state of far-end speech (c) occurs and when the control value of a predeterminable value range (Z_{N}) is reached.

10. Echo canceller as claimed in Claim 9, characterized in that the detected state of doubletalk (d) is provided to follow the rising characteristic line of the impulse response of the filter (11), while the states of non-doubletalk (a, b, c) are provided to follow the slowly falling characteristic line of the filter (11).

11. Echo canceller (1, 2, 3, 6) comprising an adaptive filter (3) which can be inserted between a receive path (r) and a send path (s), and including a non-linear filter (2) which can be inserted into the send path (s), characterized in that the echo canceller (1, 2, 3, 6) comprises an evaluation circuit (12) for detecting the states of doubletalk (d) and non-doubletalk (a, b, c) to evaluate the states of doubletalk (d) and non-doubletalk (a, b, c), and comprises a control unit (11) for determining a control value on the basis of the states of doubletalk (d) and non-doubletalk (a, b, c) to control the insertion of the non-linear filter (2) into the send path (s), the control unit (11) being arranged for predefining a control signal (25) which comes from the difference between the number of doubletalk states weighted with a first weight factor, and the number of detected states of non-doubletalk, which number is weighted with a smaller second weight factor than the first weight factor, the non-linear filter (2) being used for insertion into the send path (s) only when the state of far-end speech (c) occurs and when the control value of a predeterminable value range (Z_{N}) is reached.

12. Echo canceller as claimed in Claim 11, characterized in that the control unit (11) comprises a counter which is used for determining the number of detected states of doubletalk and states of non-doubletalk with a predeterminable timing.

## Revendications

1. Compensateur d'écho (1, 2, 3, 6) avec un filtre adaptatif (3) à monter entre une ligne de réception (r) et une ligne de transmission (s) et avec un filtre non linéaire (2) à monter dans la ligne de transmission (s),
caractérisé en ce
que le compensateur d'écho (1, 2, 3, 6) présente un compteur-décompteur (11) qui est prévu pour le comptage dans une première direction par une première valeur (Z_{U}) en cas d'état de conversation bilatérale (d) et pour le comptage dans une direction opposée à la première direction par une deuxième valeur (Z_{D}) inférieure à la première valeur (Z_{U}) en cas d'états autres qu'une conversation bilatérale (a, b, c), le filtre non linéaire (2) étant prévu uniquement en cas d'état de conversation éloignée (c) et en cas d'obtention d'une valeur minime prédéterminée (Z_{M}), en particulier de la valeur zéro, par le compteur-décompteur (11) destiné à un enclenchement dans la ligne de transmission (s).

2. Compensateur d'écho selon la revendication 1,
caractérisé en ce
que le compensateur d'écho (1, 2, 3, 6) présente une unité d'évaluation (12) pour la détermination des états de conversation bilatérale (d), conversation éloignée (c), état de pause (a) et conversation proche (b), le filtre non linéaire (2) étant actif en cas d'état déterminé de conversation éloignée (c) et inactif en cas d'état déterminé de conversation proche (b), de conversation bilatérale (d) et d'état de pause (a).

3. Compensateur d'écho selon l'une des revendications 1 ou 2,
caractérisé en ce
que l'entrée de comptage (U) du compteur-décompteur (11) est reliée à la sortie caractérisant l'état de conversation bilatérale (d) et l'entrée de décomptage (D) aux sorties de l'unité d'évaluation (12) caractérisant les états autres que la conversation bilatérale (a, b, c), la sortie de l'unité d'évaluation (12) qui caractérise l'état de conversation éloignée (c) étant reliée à la sortie (Z_{N}) du compteur-décompteur (11) à l'aide d'un circuit ET (14).

4. Compensateur d'écho selon l'une des revendications 1 à 3,
caractérisé en ce
que les sorties de l'unité d'évaluation (12) pour les états autres que la conversation bilatérale (a, b, c) sont reliées à l'aide d'un circuit OU (13), la sortie du circuit OU (13) étant raccordée à l'entrée de décomptage (D) du compteur-décompteur (11).

5. Compensateur d'écho selon l'une des revendications 1 à 4,
caractérisé en ce
que le maximum (Z_{M}) du compteur-décompteur (11) peut être déterminé en particulier de manière adaptative en fonction de l'atténuation du filtre adaptatif (3).

6. Compensateur d'écho selon la revendication 5,
caractérisé en ce
qu'en cas d'atténuation minime du filtre adaptatif (3), le maximum (Z_{M}) du compteur (11) s'élève à une valeur élevée et en ce qu'avec l'atténuation croissante du filtre adaptatif (3), le maximum (Z_{M}) devient inférieur.

7. Compensateur d'écho selon l'une des revendications 1 à 6,
caractérisé en ce
que le filtre non linéaire (2) est prévu pour la suppression de son signal d'entrée (24) en cas de dépassement à la baisse de la valeur d'un seuil à prédéterminer et pour la réduction du signal d'entrée (24) en cas de dépassement à la hausse de la valeur du seuil, de la valeur du seuil, ou en cas de commutation du signal d'entrée (24) en cas de dépassement à la hausse du seuil.

8. Dispositif de vidéoconférence ou dispositif de transmission par satellite avec un compensateur d'écho (1, 2, 3, 6) selon l'une des revendications 1 à 7.

9. Compensateur d'écho (1, 2, 3, 6) avec un filtre adaptatif (3) à enclencher entre une ligne de réception (r) et une ligne de transmission (s) et avec un filtre non linéaire (2) à enclencher dans la ligne de transmission (s),
caractérisé en ce
que le compensateur d'écho (1, 2, 3, 6) présente pour la détermination des états de la conversation bilatérale (d) et des états autres que la conversation bilatérale (a, b, c) une unité d'évaluation (12) et pour l'évaluation des états de conversation bilatérale (d) des états autres qu'une conversation bilatérale (a, b, c) et pour la détermination d'une valeur de commande à partir des états de conversation bilatérale (d) et des états autres qu'une conversion bilatérale pour la commande du montage du filtre non linéaire (2) dans la ligne de transmission (s) une unité de commande (11) qui est conçue comme un filtre avec une réponse d'impulsion à croissance rapide et à décroissance lente, le _ filtre non linéaire (2) étant prévu uniquement en cas d'état de conversation éloignée (c) et en cas d'obtention de la valeur de commande d'une plage de valeurs à prédéterminer (Z_{N}) en vue d'un montage dans la ligne de transmission (s).

10. Compensateur d'écho selon la revendication 9,
caractérisé en ce
que l'état déterminé de la conversation bilatérale (d) est prévu pour l'excitation de la caractéristique croissante de la réponse d'impulsion du filtre (11) tandis que les états autres que la conversation bilatérale (a, b, c) sont prévus pour l'excitation de la caractéristique à décroissance lente du filtre (11).

11. Compensateur d'écho (1, 2, 3, 6) avec un filtre adaptatif (3) à enclencher entre une ligne de réception (r) et une ligne de transmission (s) et avec un filtre non linéaire (2) à enclencher dans la ligne de transmission (s),
caractérisé en ce
que le compensateur d'écho (1, 2, 3, 6) présente pour la détermination des états de conversation bilatérale (d) et des états autres que la conversation bilatérale (a, b, c) une unité d'évaluation (12) et pour l'évaluation des états de conversation bilatérale (d) et des états autres que la conversation bilatérale (a, b, c) et pour la détermination d'une valeur de commande à partir des états de conversion bilatérale (d) et autres que la conversion bilatérale (a, b, c) pour la commande du montage du filtre non linéaire (2) dans la ligne de transmission (s) une unité de commande (11) qui est prévue pour la détermination d'un signal de commande (25) qui est obtenu à partir de la différence du nombre pondéré par un premier facteur de pondération de l'état de conversation bilatérale et du nombre pondéré d'un facteur de pondération inférieur au premier facteur de pondération des états déterminés autres qu'une conversation bilatérale, le filtre non linéaire (2) étant prévu seulement en cas d'état de conversation éloignée (c) et en cas d'obtention de la valeur de commande d'une plage de valeurs (Z_{N}) à prédéterminer pour le montage dans la ligne de transmission (s).

12. Compensateur d'écho selon la revendication 11,
caractérisé en ce
que l'unité de commande (11) présente un compteur qui est prévu pour la détermination du nombre des états déterminés de conversation bilatérale et des états autres que la conversation bilatérale à une cadence à prédéterminer.
